# EUROPÄISCHE PATENTANMELDUNG

(11) **EP 4 617 708 A1**
(43) Veröffentlichungstag der Anmeldung: **17.09.2025**
(21) Anmeldenummer: 25159858.7
(22) Anmeldetag: 25.02.2025
(51) Int. Cl.: G01S 7/24, G01S 7/41, G01S 13/86, G01S 13/88, G01S 13/89

(54) **VERFAHREN ZUM BETREIBEN EINES MESSGERÄTS**

(30) Priorität: 11.03.2024 DE 102024202229
(71) Anmelder: Robert Bosch GmbH, 70442 Stuttgart (DE)
(72) Erfinder: Troeltzsch, Uwe, 51503 Roesrath (DE); Steuler, Jan Linus, 61200 Woelfersheim (DE); Koelsch, Andreas, 86971 Peiting (DE); Sgarz, Heiko, 71229 Leonberg (DE); Borowski, Judith, Ho Chi Minh City (VN); Giliard, Anke, 70180 Stuttgart (DE); Frischen, Andreas, 71229 Leonberg (DE); Fiederer, Lukas, 72336 Balingen (DE); Moster, Benjamin, 75223 Niefern-Oeschelbronn (DE)

(57) **Zusammenfassung**

Die Erfindung betrifft ein Computerimplementiertes Verfahren (200) zum Betreiben eines Messgeräts (100), insbesondere eines Wanddiagnosegeräts, umfassend:
Empfangen (201) von Radardaten (103) einer Radarsensoreinheit (101) des Messgeräts (100);
Ausführen (203) einer Wanddiagnose durch Ausführen einer Analyse der Radardaten (103) und Bereitstellen von Diagnoseergebnissen (109) durch ein Diagnosemodul (107) des Messgeräts (100);
Ermitteln (209) von Feedbackinformationen (112).

## Beschreibung

Die vorliegende Erfindung betrifft ein Verfahren zum Betreiben eines Messgeräts, insbesondere eines Wanddiagnosegeräts.

### Stand der Technik

Aus dem Stand der Technik sind Diagnosegeräte zum Diagnostizieren von Wänden und zum Detektieren von in den Wänden ausgebildeten Objekten bekannt.

Es ist eine Aufgabe der vorliegenden Erfindung, ein verbessertes Verfahren zum Betreiben eines Messgeräts, insbesondere eines Wanddiagnosegeräts bereitzustellen. Es ist ferner eine Aufgabe, ein verbessertes Verfahren zum Trainieren einer künstlichen Intelligenz eines Messgeräts bereitzustellen.

Die Aufgabe wird durch die Verfahren der unabhängigen Ansprüche gelöst. Vorteilhafte Ausführungsformen sind Gegenstand der abhängigen Ansprüche.

Nach einem Aspekt wird ein Computerimplementiertes Verfahren zum Betreiben eines Messgeräts bereitgestellt, insbesondere eines Wanddiagnosegeräts, umfassend:
Empfangen von Radardaten einer Radarsensoreinheit des Messgeräts, wobei die Radardaten eine zu diagnostizierende Wand abbilden;
Ausführen einer Wanddiagnose durch Ausführen einer Analyse der Radardaten und Bereitstellen von Diagnoseergebnissen durch ein Diagnosemodul des Messgeräts, wobei die Wanddiagnose umfasst:
   Ausführen einer Wandtypenklassifikation und Bestimmen eines Wandtyps der Wand durch das Diagnosemodul, wobei die Diagnoseergebnisse wenigstens den Wandtyp der Wand umfassen; und/oder
   Ausführen einer Objekterkennung eines in der Wand angeordneten Objekts durch das Diagnosemodul, wobei die Objekterkennung eine Objektdetektion und eine Objektklassifikation und ein Bestimmen einer Objektposition in der Wand und eines Objekttyps des Objekts umfasst, und wobei die Diagnoseergebnisse wenigstens die Objektposition und/oder den Objekttyp umfassen;
   Ermitteln von Feedbackinformationen, wobei die Feedbackinformationen eine Übereinstimmung der Diagnoseergebnisse mit einem aktuellen Zustand der Wand beschreiben.

Hierdurch kann der technische Vorteil erreicht werden, dass ein verbessertes Verfahren zum Betreiben eines Messgeräts, insbesondere eines Wanddiagnosegeräts bereitgestellt werden kann. Hierzu werden zunächst eine zu diagnostizierende Wand abbildende Radardaten einer Radarsensoreinheit des Messgeräts empfangen. Basierend auf den Radardaten wird darauffolgend durch ein Diagnosemodul des Messgeräts eine Wanddiagnose der zu diagnostizierenden Wand durchgeführt.

Die Wanddiagnose umfasst das Ausführen einer Wandtypenklassifikation und das Bestimmen eines Wandtyps der Wand und/oder das Ausführen einer Objekterkennung eines in der Wand angeordneten Objekts durch das Diagnosemodul. Die Objekterkennung umfasst hierbei eine Objektdetektion mit der Bestimmung einer Objektposition und einer Objektklassifikation mit der Bestimmung eines Objekttyps.

Ferner werden Feedbackinformationen ermittelt. Die Feedbackinformationen beschreiben hierbei eine Übereinstimmung der während der Wanddiagnose generierten Diagnoseergebnisse mit einem aktuellen Zustand der Wand.

Durch das entsprechend eingerichtete Diagnosemodul kann erreicht werden, dass für die Wanddiagnose, und insbesondere für das Bestimmen des Wandtyps und/oder das Bestimmen des Objekttyps, neben den Radardaten keine zusätzlichen Sensorinformationen benötigt werden. Die Bestimmung des Wandtyps und/oder des Objekttyps kann ausschließlich auf den Radardaten der Radarsensoreinheit ausgeführt werden. Das Messgerät muss somit nicht mit zusätzlichen Sensoren bestückt sein.

Durch die automatische Ermittlung des Wandtyps im Zuge der Wanddiagnose kann vermieden werden, dass durch den Nutzer / die Nutzerin des Messgeräts händisch der vorliegende Wandtyp der zu untersuchenden Wand eingegeben werden muss. Ferner kann durch die automatische Bestimmung des Wandtyps durch das Diagnosemodul der entsprechend ermittelte Wandtyp in der weiteren Wanddiagnose, beispielsweise als Hintergrundkorrektur für die Objekterkennung, verwendet werden. Hierdurch kann die Qualität der Wanddiagnose weiter verbessert werden.

Durch das Ermitteln der Feedbackinformationen kann die Qualität der ausgeführten Wanddiagnose unmittelbar überprüft werden. Die Feedbackinformationen können insbesondere für die Verbesserung der Wanddiagnose, beispielsweise durch ein Update des Diagnosemoduls, verwendet werden.

Nach einer Ausführungsform umfasst das Verfahren ferner:
Bereitstellen der Feedbackinformationen an eine externe Servereinheit zum Berücksichtigen der Feedbackinformationen in einem Update des Diagnosemoduls.

Hierdurch kann der technische Vorteil erreicht werden, dass durch das Bereitstellen der Feedbackinformationen an eine externe Servereinheit die entsprechend bereitgestellten Feedbackinformationen für die Verbesserung der Performance des Diagnosemoduls verwendet werden können. Die Feedbackinformationen können hierbei beispielsweise von einer Mehrzahl von im Betrieb befindlichen Messgeräten stammen. Durch die derart zusammengetragene umfassende Feedbackinformation kann die Performance der in den Messgeräten verbauten Diagnosemodule durch die Servereinheit überprüft werden. Dies ermöglicht ein zielgerichtetes Update der Software des Diagnosemoduls, wobei das jeweilige Update darauf abzielt, die Aspekte des Diagnosemoduls zu verbessern, die gemäß der Feedbackinformationen eine unzureichende Performance aufweisen.

Nach einer Ausführungsform werden zusätzlich zu den Feedbackinformationen die entsprechenden Radardaten der externen Servereinheit bereitgestellt werden.

Hierdurch kann der technische Vorteil erreicht werden, dass durch das Bereitstellen der Radardaten der Messgeräte zusätzlich zu den Feedbackinformationen der externen Servereinheit eine umfassende Beschreibung der Situation bereitgestellt werden kann, in der das Messgerät die Diagnoseergebnisse erstellt hat, die zu den Feedbackinformationen geführt haben. Hierdurch kann das Update bzw. die Verbesserung des Diagnosemoduls weiter verbessert werden.

Nach einer Ausführungsform umfasst das Ausführen der Wanddiagnose ferner: Ausführen einer Objekttiefenbestimmung und Bestimmen einer Objekttiefe des Objekts in der Wand durch das Diagnosemodul, wobei die Objekttiefe als ein Abstand des Objekts zu einer Oberfläche der Wand definiert ist; und/oder Ausführen einer Objektausdehnungsbestimmung und Bestimmen einer Objektausdehnung des Objekts entlang einer vordefinierten Richtung durch das Diagnosemodul, wobei die Diagnoseergebnisse ferner wenigstens die Objekttiefe und/oder die Objektausdehnung des Objekts umfassen.

Hierdurch kann der technische Vorteil erreicht werden, dass eine umfassende Wanddiagnose durchgeführt werden kann. Hierzu umfasst die Wanddiagnose neben dem Bestimmen des Wandtyps bzw. der Objektposition und/oder des Objekttyps die Bestimmung einer Objekttiefe und/oder die Bestimmung einer Objektausdehnung. Durch die Berücksichtigung der Objekttiefe und/oder der Objektausdehnung kann eine detaillierte Beschreibung der durch das Messgerät detektierten Objekte bereitgestellt werden.

Nach einer Ausführungsform werden in der Objekterkennung eine Mehrzahl von möglichen Objektpositionen und/oder eine Mehrzahl möglicher Objekttypen des Objekts als eigenständige Diagnoseergebnisse bestimmt werden, und/oder wobei in der Wandtypenklassifikation eine Mehrzahl von möglichen Wandtypen der Wand als eigenständige Diagnoseergebnisse bestimmt werden, und/oder wobei in der Objekttiefenbestimmung eine Mehrzahl von möglichen Objekttiefen als eigenständige Diagnoseergebnisse bestimmt werden und/oder wobei in der Objektausdehnungsbestimmung eine Mehrzahl von möglichen Objektausdehnungen des Objekts als eigenständige Diagnoseergebnisse bestimmt werden, wobei jedes der mehreren Diagnoseergebnisse in einer Anzeigeeinheit des Messgeräts angezeigt werden.

Hierdurch kann der technische Vorteil erreicht werden, dass eine detaillierte Wanddiagnose ermöglich ist. Indem mehrere Objektpositionen und/oder mehrere Objekttypen und/oder mehrere Objekttiefen und/oder mehrere Objektausdehnungen und/oder mehrere Wandtypen in der Wanddiagnose ermittelt und in der Anzeigeeinheit des Messgeräts angezeigt werden, kann dem Nutzer / der Nutzerin ein umfassendes Bild der zu diagnostizierenden Wand bereitgestellt werden.

Nach einer Ausführungsform umfasst das Verfahren ferner:
Bereitstellen einer ersten Auswahlfunktion und/oder einer zweiten Auswahlfunktion, wobei durch Ausführen der ersten Auswahlfunktion durch einen Nutzer / eine Nutzerin des Messgeräts wenigstens einer der angezeigten Wandtypen und/oder eine der angezeigten Objektpositionen und/oder Objekttypen und/oder Objekttiefen und/oder Objektausdehnungen auswählbar ist, und/oder wobei durch Ausführen der zweiten Auswahlfunktion durch den Nutzer / die Nutzerin des Messgeräts die automatische Bestimmung des Wandtyps während der Wanddiagnose und/oder das Anzeigen des automatisch bestimmten Wandtyps in der Anzeigeeinheit deaktivierbar ist und ein Wandtyp durch den Nutzer / die Nutzerin manuell wählbar ist.

Hierdurch kann der technische Vorteil erreicht werden, dass durch die erste Auswahlfunktion der Nutzer / die Nutzerin aus den mehreren angezeigten

Wandtypen den passenden Wandtyp für die zu untersuchende Wand auswählen kann. Bei Kenntnis des Wandtyps der zu untersuchenden Wand kann der Nutzer / die Nutzerin den am besten passenden durch das Messgerät bereitgestellten möglichen Wandtyp auswählen. Der ausgewählte Wandtyp kann hierbei für die weitere Wanddiagnose verwendet werden, während die nicht ausgewählten Wandtypen unberücksichtigt bleiben. Hierdurch kann die Qualität der Wanddiagnose weiter verbessert werden.

Durch die zweite Auswahlfunktion kann der Nutzer / die Nutzerin die automatische Bestimmung des Wandtyps deaktivieren und den passenden Wandtyp manuell wählen. Dies kann insbesondere für Diagnosesituationen vorteilhaft sein, in denen der Nutzer / die Nutzerin den Wandtyp der vorliegenden Wand kennt und die durch das Messgerät bereitgestellten möglichen Wandtypen den tatsächlich vorliegenden Wandtyp nicht vollends abbilden. Hierdurch kann wiederum die Qualität der Wanddiagnose erhöht werden.

Nach einer Ausführungsform umfasst das Verfahren ferner:
Bereitstellen einer Feedbackfunktion, wobei bei einer Ausführung der Feedbackfunktion durch den Nutzer / die Nutzerin eine Übereinstimmung des angezeigten Wandtyps und/oder der angezeigten Objektposition und/oder des angezeigten Objekttyps und/oder der angezeigten Objekttiefe und/oder der angezeigten Objektausdehnung mit dem tatsächlichen Wandtyp und/oder der tatsächlichen Objektposition und/oder des tatsächlichen Objekttyps und/oder der tatsächlichen Objekttiefe und/oder der tatsächlichen Objektausdehnung bestimmbar ist.

Hierdurch kann der technische Vorteil erreicht werden, dass durch das Bereitstellen der Feedbackfunktion klare Feedbackinformationen über die Übereinstimmung der angezeigten Wandtypen mit dem tatsächlichen Wandtyp und/oder der angezeigten Objektposition und/oder des angezeigten Objekttyps und/oder der angezeigten Objekttiefe und/oder der angezeigten Objektausdehnung mit den tatsächlichen Objektpositionen, den tatsächlichen Objekttypen, den tatsächlichen Objekttiefen und/oder den tatsächlichen Objektausdehnungen bereitgestellt werden können. Hierdurch kann durch Betätigung der Feedbackfunktion somit aktiv eine Feedbackinformation über die Qualität der ausgeführten Wanddiagnose bereitstellen. Dies ermöglicht eine Ermittlung detaillierter und passender Feedbackinformationen. Die Feedbackfunktion umfasst beispielsweise eine Eingabefunktion, mittels der der Nutzer / die Nutzerin des Messgeräts manuell das Feedback eingeben kann.

Nach einer Ausführungsform umfasst das Ermitteln der Feedbackinformation: Empfangen von Auswahlbefehlen der ersten und/oder zweiten Auswahlfunktion und/oder von Feedbackbefehlen der Feedbackfunktion und Ermitteln der Feedbackinformationen basierend auf den Auswahlbefehlen und/oder Feedbackbefehlen, wobei in den Auswahlbefehlen gemäß der ersten und/oder zweiten Auswahlfunktionen entsprechende Auswahlen getroffen sind, und wobei in den Feedbackbefehlen entsprechende durch den Nutzer / die Nutzerin bereitgestellte Feedbackinformationen enthalten sind.

Hierdurch kann der technische Vorteil erreicht werden, dass die Feedbackinformationen basierend auf den empfangenen Auswahlbefehlen der ersten und zweiten Auswahlfunktionen und/oder der Feedbackbefehle der Feedbackfunktion ermittelt werden können. Hierdurch können detaillierte Feedbackinformationen über die Qualität der ausgeführten Wanddiagnose bereitgestellt werden.

Nach einer Ausführungsform umfasst das Ermitteln der Feedbackinformationen: Ermitteln durch das Diagnosemodul, ob bei wiederholten Diagnosen einer gleichen Position des Messgeräts relativ zur Wand Abweichungen der in der Wanddiagnose ermittelten Diagnoseergebnisse bestehen; und
Anzeigen der Abweichungen in der Anzeigeeinheit; und
Empfangen von Feedbackbefehlen des Nutzers / der Nutzerin bezüglich der Abweichungen, wobei in den Feedbackbefehlen die angezeigten Abweichungen bestätigt oder widerlegt werden.

Hierdurch kann der technische Vorteil erreicht werden, dass eine weitere Verbesserung der Wanddiagnose ermöglicht ist. Hierdurch werden durch das Diagnosemodul Abweichungen der Diagnoseergebnisse mehrerer Wanddiagnosen, die durch das Messgerät für identische Positionen des Messgeräts relativ zur Wand ausgeführt wurden, ermittelt. Die Abweichungen können in der Anzeigeeinheit angezeigt werden. Der Nutzer / die Nutzerin kann über die Feedbackfunktion Feedbackinformationen bezüglich der Abweichungen geben, in denen die Abweichungen bestätigt oder widerlegt werden. Hierüber kann somit die Konstanz der Wanddiagnose überprüft und dokumentiert werden. Die entsprechenden Feedbackinformationen können im Weiteren für die Verbesserung des Diagnosemoduls berücksichtigt werden.

Nach einer Ausführungsform umfasst das Messgerät ferner wenigstens einen Induktionssensor und/oder einen Wirbelstromsensor und/oder einen Kapazitätssensor und/oder Wechselstromsensor und/oder ein NMR-Sensor und/oder einen Ultraschallsensor zum Bereitstellen zusätzlicher Sensordaten, wobei das Diagnosemodul eingerichtet ist, die Wanddiagnose unter Berücksichtigung der zusätzlichen Sensordaten auszuführen.

Hierdurch kann der technische Vorteil erreicht werden, dass durch weitere Sensordaten zusätzlicher Sensoren, die jeweils eingerichtet sind, unterschiedliche physikalische Messgrößen zu detektieren, zusätzliche Information zuzüglich zu den Informationen der Radardaten der Radarsensoreinheit in die Wanddiagnose einfließen können. Diese zusätzlichen und zu den Informationen der Radardaten der Radarsensoreinheit vorzugsweise komplementären Information ermöglichen eine weitere Präzisierung der Wanddiagnose bzw. der Objekterkennung.

Nach einer Ausführungsform umfasst das Diagnosemodul wenigstens eine entsprechend trainierte künstliche Intelligenz, die eingerichtet ist, basierend auf den Radardaten und/oder den zusätzlichen Sensordaten eine Objekterkennung und/oder eine Wandklassifikation und/oder eine Objekttiefenbestimmung und/oder eine Objektausdehnungsbestimmung durchzuführen.

Hierdurch kann der technische Vorteil erreicht werden, dass durch die Ausbildung des Diagnosemoduls als eine entsprechend trainierte künstliche Intelligenz, die darauf trainiert ist, basierend auf den Radardaten, bzw. gegebenenfalls unter Berücksichtigung der Information der zusätzlichen Sensoren, eine Objekterkennung und/oder eine Wandklassifikation und/oder eine Objekttiefenbestimmung und/oder eine Objektausdehnungsbestimmung auszuführen, ein zuverlässiges und leistungsfähiges Diagnosemodul bereitgestellt werden kann. Durch die Verwendung der Technik der künstlichen Intelligenz kann eine präzise Wanddiagnose bereitgestellt werden.

Nach einer Ausführungsform umfassen die Objektklassen des Objekttyps des Objekts: Metall-/Nichtmetallobjekt, magnetische/nicht-magnetische Objekte, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nichtwassergefülltes Kunststoffrohr, beispielsweise Abwasserrohr, und/oder wobei die Wandtypklassen des Wandtyps der Wand umfassen: Betonwand, Leichtbau-/Trockenbauwand, gemauerte Wand, von vermauerten Steinen der Wand und/oder Wand mit einer Oberflächenheizung, wie beispielsweise Fußbodenheizung oder Wandheizung.

Hierdurch kann der technische Vorteil erreicht werden, dass Objekte und Wände unterschiedlichster Typen erkannt und klassifiziert werden können. Metallobjekte können beispielsweise metallische Rohre, metallische Stangen, metallische Träger, metallische Kabel und alle anderen im Wandbau üblich anzutreffende metallische Objekte umfassen.

Nach einem Aspekt wird ein Verfahren zum Trainieren einer künstlichen Intelligenz eines Messgeräts zur Wanddiagnostik bereitgestellt, umfassend: Bereitstellen eines Trainingsdatensatzes zum Trainieren der künstlichen Intelligenz, wobei der Trainingsdatensatz eine Wand und ein in der Wand ausgebildetes Objekt abbildende Radardaten und die nach dem Verfahren zum Betreiben eines Messgeräts bereitgestellten Feedbackinformationen umfasst; Trainieren der künstlichen Intelligenz basierend auf dem Trainingsdatensatz und unter Berücksichtigung der Feedbackinformationen zum Ausführen einer Objekterkennung eines in einer Wand ausgebildeten Objekts, wobei die Objekterkennung wenigstens eine Objektdetektion und eine Objektklassifikation umfasst.

Hierdurch kann der technische Vorteil erreicht werden, dass ein verbessertes Training der künstlichen Intelligenz des Wanddiagnosegeräts, insbesondere ein Nach-Training, ermöglicht ist, bei dem Feedback der Nutzer / die Nutzerin der Wanddiagnosegeräte mitberücksichtigt wird.

Nach einem Aspekt wird eine Recheneinheit bereitgestellt, die eingerichtet ist, das Verfahren zum Betreiben eines Messgeräts nach einer der voranstehenden Ausführungsformen und/oder das Verfahren zum Trainieren einer künstlichen Intelligenz auszuführen.

Nach einem Aspekt wird ein Computerprogrammprodukt umfassend Befehle bereitgestellt, die bei der Ausführung des Programms durch eine Datenverarbeitungseinheit diese veranlassen, das Verfahren zum Betreiben eines Messgeräts nach einer Ausführungsformen und/oder das Verfahren zum Trainieren einer künstlichen Intelligenz auszuführen.

Ausführungsformen der Erfindung sind mit Bezug auf die folgenden Figuren beschrieben. Die Figuren zeigen:
- Fig. 1: eine schematische Darstellung eines Messgeräts gemäß einer Ausführungsform;
- Fig. 2: eine weitere schematische Darstellung des Messgeräts gemäß einer weiteren Ausführungsform;
- Fig. 3: eine weitere schematische Darstellung des Messgeräts gemäß einer weiteren Ausführungsform;
- Fig. 4: eine schematische Darstellung einer Messung des Messgeräts gemäß einer Ausführungsform,
- Fig. 5: eine weitere schematische Darstellung des Messgeräts gemäß einer weiteren Ausführungsform;
- Fig. 6: eine schematische Darstellung eines Systems zum Betreiben eines Messgeräts gemäß einer Ausführungsform,
- Fig. 7: ein Flussdiagramm eines Verfahrens zum Betreiben eines Messgeräts gemäß einer Ausführungsform,
- Fig. 8: ein weiteres Flussdiagramm des Verfahrens zum Betreiben eines Messgeräts gemäß einer weiteren Ausführungsform,
- Fig. 9: ein weiteres Flussdiagramm des Verfahrens zum Betreiben eines Messgeräts gemäß einer weiteren Ausführungsform,
- Fig. 10: ein Flussdiagramm eines Verfahrens zum Trainieren einer künstlichen Intelligenz eines Messgeräts gemäß einer Ausführungsform, und
- Fig. 11: eine schematische Darstellung eines Computerprogrammprodukts.

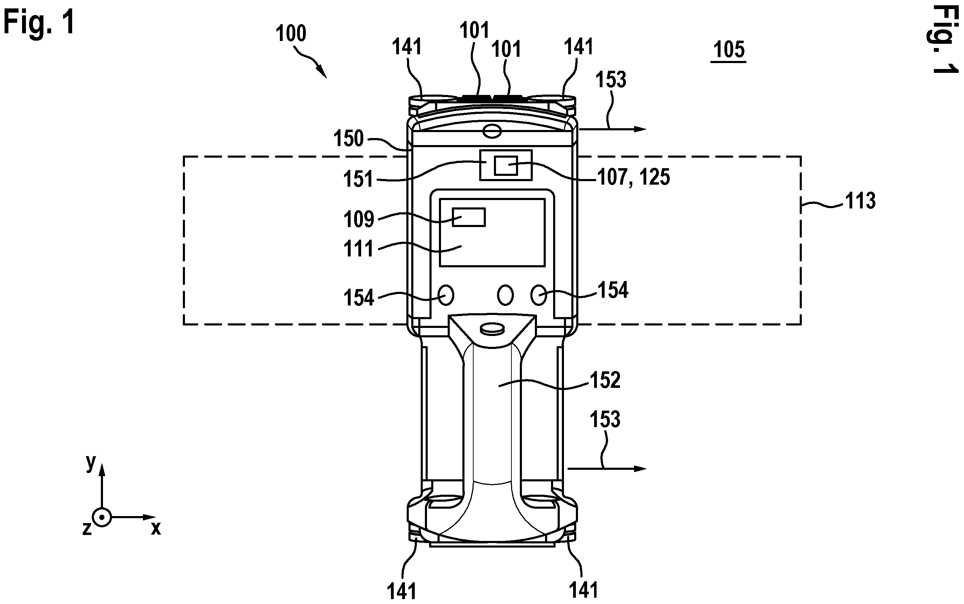

Fig. 1 zeigt eine schematische Darstellung eines Messgeräts 100 gemäß einer Ausführungsform.

Die vorliegende Erfindung betrifft ein Messgerät, insbesondere ein Wanddiagnosegerät für Untersuchungen von zu bearbeitenden Wänden 105. Im Stand der Technik sind Wanddiagnosegeräte bekannt, die dazu verwendet werden, in Wänden angeordnete Objekte zu detektieren. Derartige Geräte erlauben es einem Nutzer / einer Nutzerin zu bearbeitende Wände nach in den Wänden angeordnete Objekte zu untersuchen, um hierauf basierend die geplanten Arbeiten, beispielsweise das Bohren in Wände, derart ausführen zu können, dass Beschädigungen der in den Wänden angeordnete Objekte vermieden werden können.

In der gezeigten Ausführungsform umfasst das Messgerät 100 ein Gehäuse 150 mit einem Griff 152 zum Greifen des Messgeräts 100 durch einen Nutzer / eine Nutzerin, einer Anzeigeeinheit 111 zum Anzeigen von Diagnoseergebnissen 109 der Wanddiagnose und Bedienelemente 154 zum Schalten des Messgeräts 100 in verschiedene Betriebsmodi ausgebildet.

Erfindungsgemäß umfasst das Messgerät 100 wenigstens eine Radarsensoreinheit 101. Mittels der Radarsensoreinheit 101 können Radarsignal in Richtung der zu untersuchenden Wand 105 ausgesendet und von der Wand 105 reflektierte Radarsignale empfangen werden.

Die Radarsensoreinheit 101 kann beispielsweise als ein schmalbandiges Radardetektorgerät im Frequenzbereich 2,4 gHz bis 2,4835 gHz ausgebildet sein.

Das Messgerät 100 umfasst zur Ausführung der Wanddiagnose ferner ein Diagnosemodul 107, das auf einer Recheneinheit 151 des Messgeräts 100 ausführbar ist. Das Diagnosemodul 107 ist eingerichtet, basierend auf den Radardaten 103 der Radarsensoreinheit 101 eine entsprechende Diagnose der zu untersuchenden Wand auszuführen. Die Radardaten 103 der Radarsensoreinheit 101 bilden hierbei die zu untersuchende Wand 105 und gegebenenfalls innerhalb der Wand 105 angeordnete Objekte 113 ab.

Die durch das Diagnosemodul 107 ausgeführte Wanddiagnose umfasst hierbei wenigstens das Ausführen einer Objekterkennung. Die Objekterkennung umfasst hierbei eine Objektdetektion und eine Objektklassifikation des in der Wand 105 angeordneten Objekts 113. Die Objektdetektion umfasst hierbei wenigstens die Bestimmung einer Objektposition 115. Die Objektposition beschreibt hierbei die Positionierung des in der Wand 105 angeordneten Objekts in Bezug auf ein durch das Messgerät 100 festgelegtes Bezugssystem. Die Objektklassifikation des detektierten Objekts 113 umfasst wenigstens die Bestimmung eines Objekttyps 117 des detektierten Objekts 113.

Die derart bestimmten Diagnoseergebnisse der Wanddiagnose, sprich wenigstens die bestimmte Objektposition 115 und/oder der bestimmte Objekttyp 117 des in der Wand 105 angeordneten Objekts 113, werden darauffolgend in einer Anzeigeeinheit 111 des Messgeräts 100 einem Nutzer / einer Nutzerin des Messgeräts 100 dargestellt. Die Anzeigeeinheit 111 kann beispielsweise als ein entsprechendes Display ausgebildet sein und die Diagnoseergebnisse 109 können visuell angezeigt werden. Zusätzlich kann die Anzeige der Diagnoseergebnisse 109 über akustische und/oder haptische Signale unterstützt werden. Die haptischen Signale können beispielsweise über entsprechende Vibrationssignale realisiert sein.

Das Objekt 113 kann hierbei beispielsweise durch ein entsprechendes Symbol im Display angezeigt werden. Das Objekt 113 kann hierbei in der entsprechenden Objektposition 115 in dem Display angezeigt werden. Die Objektausdehnung 121 kann durch eine entsprechende Größe des angezeigten Symbols visualisiert sein. Der jeweilige Objekttyp 117 des Objekts 113 kann mit einem entsprechenden Begriff oder einer farblichen Unterlegung des Symbols oder durch eine spezielle Form des das Objekt 113 repräsentierenden Symbols visualisiert werden.

Alternativ kann die Wanddiagnose zusätzlich die Bestimmung eines Wandtyps 123 in Form einer Wandtypenklassifikation der zu untersuchenden Wand 105 umfassen. Der Wandtyp 123 beschreibt hierbei den jeweiligen Typ der zu untersuchenden Wand 105. Der Wandtyp kann beispielsweise entsprechenden Wandtypklassen zugeordnet werden, die umfassen können: Betonwand, Leichtbau- /Trockenbauwand, gemauerte Wand und/oder von vermauerten Steinen der Wand, Fußbodenheizung, Wandheizung oder ähnlichen Gebäuden vorzufinden Wandtypen.

Gemäß einer Ausführungsform ist das Diagnosemodul 107 ferner eingerichtet, basierend auf den Radardaten 103 einer Objekttiefe 119 des Objekts 113 innerhalb der Wand 105 zu bestimmen. Die Objekttiefe 119 ist hierbei durch einen Abstand des in der Wand 105 ausgebildeten Objekts zu einer Oberfläche der Wand 105 definiert. Der Abstand kann auf der Objektseite beispielsweise in Bezug auf eine Objektoberfläche oder in Bezug auf einen Objektmittelpunkt definiert sein. Der Abstand zur Oberfläche der Wand 105 beschreibt hierbei einen kürzesten Abstand, der durch einen zur Oberfläche der Wand 105 senkrecht Richtung definiert ist.

Gemäß einer Ausführungsform ist das Diagnosemodul 107 ferner eingerichtet, basierend auf den Radardaten 103 eine Objektausdehnung 121 des Objekts 113 in wenigstens einer vordefinierten Richtung zu bestimmen. Die Objektausdehnung 121 des Objekts 113 beschreibt hierbei eine räumliche Ausdehnung des Objekts 113 in wenigstens einer Raumrichtung, vorzugsweise in zwei Raumrichtungen, besonders bevorzugt in drei Raumrichtungen. Das Objekt 113 kann hierdurch als ein eindimensionales, zweidimensionales oder dreidimensionales Objekt 113 beschrieben werden.

In der üblichen Verwendung wird das Messgerät 100 an der Wandoberfläche der zu untersuchenden Wand 105 platziert. Über die Radarsensoreinheit 101 werden Radarsignale in Richtung der Wand 105 ausgesendet und von der Wand 105 bzw. den danach angeordneten Objekten 113 reflektierte Radarsignale empfangen. Auf diesen Radardaten 103 der Radarsensoreinheit 101 wird durch das Diagnosemodul 107 die oben beschriebene Wanddiagnose ausgeführt und es werden entsprechende Diagnoseergebnisse 109 ermittelt.

Die Diagnoseergebnisse 109 können beispielsweise die Objektposition 115 und/oder den Objekttyp 117 des in der Wand 105 angeordneten Objekts 113 umfassen. Alternativ oder zusätzlich können die Diagnoseergebnisse 109 den Wandtyp 123 der Wand 105 und/oder die Objekttiefe 119 und/oder die Objektausdehnung 121 des Objekts 113 umfassen.

Die derart ausgestalteten Diagnoseergebnisse 109 können darauffolgend einen Nutzer / eine Nutzerin des Messgeräts 100 in einer Anzeigeeinheit 111 des Messgeräts 100 angezeigt werden. Die Anzeigeeinheit 111 kann beispielsweise als ein entsprechendes Display ausgebildet sein. Die Diagnoseergebnisse 109 können in der Anzeigeeinheit 111 in graphischer Form oder in Textform angezeigt sein.

Gemäß einer Ausführungsform umfasst das Messgerät 100 ferner eine Bewegungserfassungseinheit 141. Mit der Bewegungserfassungseinheit 141 kann eine Bewegung des Messgeräts 100 relativ zur Wand 105 erfasst werden. Die Bewegungserfassungseinheit 141 kann hierzu beispielsweise wenigstens ein Rollenelement aufweisen. Bei Auflage des Rollenelements auf der Wandoberfläche der Wand 105 kann bei Bewegung des Messgeräts 100 entlang einer Bewegungsrichtung 153 durch Abrollen des Rollenelements die Bewegung des Messgeräts 100 relativ zur Wand 105 erfasst werden. Alternativ hierzu kann die Bewegungserfassungseinheit 141 eine andere Ausgestaltung aufweisen, mittels der eine relative Bewegung des Messgeräts 100 relativ zur Wand 105 erfassbar ist.

Durch die Bewegung des Messgeräts 100 relativ zur Wand 105 können Radardaten 103 der Radarsensoreinheit 101 für eine Mehrzahl verschiedener Positionierungen des Messgeräts 100 relativ zur Wand 105 aufgenommen werden. Dies ermöglicht eine Untersuchung der Wand 105 in einem größeren Raumbereich, als dies durch den Wirkbereich der Radarsensoreinheit 101 gegeben ist. Dies ermöglicht das Erfassen von Objekten 113, die eine größere räumliche Ausdehnung aufweisen, als der Wirkbereich der Radarsensoreinheit 101.

Während der Bewegung des Messgeräts 100 entlang der Bewegungseinrichtung 153 können durchgehend Radardaten 103 der Radarsensoreinheit 101 aufgenommen werden. Die Wanddiagnose kann basierend auf diesen Radardaten 103 während des Bewegens des Messgeräts 100 entlang der Bewegungsrichtung 153 durch das Diagnosemodul 107 ausgewertet werden. Dies ermöglicht eine beschleunigte Wanddiagnose, die ihre Positionierung des Messgeräts 100 relativ zur Wand 105 berücksichtigt.

Gemäß seiner Ausführungsform ist das Diagnosemodul 107 als eine entsprechende trainierte künstliche Intelligenz 125 ausgebildet. Die künstliche Intelligenz 125 ist hierbei wenigstens darauf trainiert, basierend auf den Radardaten 103 der Radarsensoreinheit 101 die oben beschriebene Wanddiagnose auszuführen und wenigstens die Objektposition 115 und den Objekttyp 117 eines in der Wand 105 angeordneten Objekts 113 zu bestimmen. Die Objektklassifizierung bzw. das Bestimmen des Objekttyps 117 umfasst hierbei das Zuordnen des detektierten Objekts 113 in vordefinierte Objektklassen.

Die Objektklassen können hierbei umfassen: Metall- /Nichtmetallobjekt Kabel für Niederspannung, Kabel mit einphasigem AC-Signal, Kabel mit mehrphasigen AC-Signa, Holzträger, Metallträger, Kunststoffrohr, wassergefülltes Kunststoffrohr, beispielsweise Frischwasserrohr, nicht wassergefülltes Kunststoffrohr, beispielsweise Abwasserrohr oder andere in Gebäudewänden übliche verbaute Elemente.

Ferner kann die künstliche Intelligenz 125 darauf trainiert sein, wenigstens auf den Radardaten 103 der Radarsensoreinheit 101 den Wandtyp 123 der zu untersuchenden Wand 105 zu bestimmen. Mögliche Wandtypen 123 können hierbei umfassen: Betonwand, Leichtbau- /Trockenbauwand, gemauerte Wand und/oder einzelne Steine der gemauerten Wand, Fußbodenheizung, Wandheizung oder andere übliche in Gebäuden verbaute Wandtypen.

Gemäß einer Ausführungsform kann das Messgerät 100 neben der Radarsensoreinheit 101 weitere zusätzliche Sensoren umfassen, mittels denen zusätzliche physikalische Größen detektierbar sind. Beispielsweise kann das Messgerät 100 einen Induktionssensor und/oder einen Wirbelstromsensor und/oder Kapazitätssensor und/oder einen Wechselstromsensor und/oder einen NMR-Sensor und/oder einen Ultraschallsensor oder andere in Wanddiagnosegeräten üblich verbaute Sensoren umfassen.

Das Diagnosemodul 107, insbesondere die entsprechende trainierte künstliche Intelligenz 125, kann hierbei darauf eingerichtet sein, basierend auf den Radardaten 103 der Radarsensoreinheit 101 und unter Berücksichtigung der zusätzlichen Sensorinformationen der weiteren Sensoren die oben beschrieben Wanddiagnose auszuführen. Die zusätzlichen Informationen der zusätzlichen oben genannten Sensoren können hierzu insbesondere zur Objekterkennung der in den Wänden 105 angeordneten Objekte 113 verwendet werden. Über die zusätzlichen Sensorinformationen kann gegebenenfalls eine verbesserte Detektion der Objekte 113 und gegebenenfalls eine verbesserte Klassifikation der Objekte 113 erreicht werden.

Insbesondere kann beispielsweise das Material der Objekte 113, beispielsweise als metallisches oder nichtmetallisches Material, durch die Verwendung der zusätzlichen Sensorinformation verbessert und klassifiziert werden.

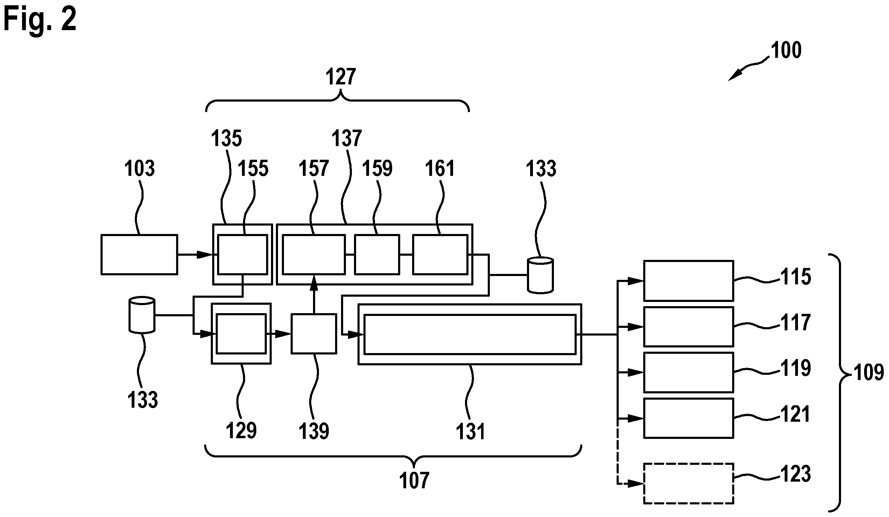

Fig. 2 zeigt eine weitere schematische Darstellung des Messgeräts 100 gemäß einer weiteren Ausführungsform.

In der gezeigten Ausführungsform umfasst das Messgerät 100 neben dem Diagnosemodul 107 ein Vorverarbeitungsmodul 127. Zur Wanddiagnose empfängt das Messgerät 100 zunächst die Radardaten 103 der Radarsensoreinheit 101. Über das Vorverarbeitungsmoduls 127 wird eine Vorverarbeitung der empfangenden Radardaten 103 ausgeführt. Über die Vorverarbeitung des Vorverarbeitungsmoduls 127 können die Radardaten beispielsweise in eine entsprechende für die Wanddiagnose durch das Diagnosemodul 107 benötigte Datenstruktur gebracht werden.

Wie oben beschrieben wird durch das Diagnosemodul 107 während der Wanddiagnose die oben beschriebenen Diagnoseergebnisse 109 erstellt. Die Diagnoseergebnisse 109 können hierbei beispielsweise die Objektposition 115 und/oder den Objekttyp 117 und/oder die Objekttiefe 119 und/oder die Objektausdehnung 121 eines in der zu untersuchenden Wand 105 ausgebildeten Objekts 113 und/oder den Wandtyp 123 der zu untersuchenden Wand 105 umfassen. Die entsprechend generierten Diagnoseergebnisse 109 können darauffolgend in der Anzeigeeinheit 111 des Messgeräts 100 angezeigt werden.

Gemäß einer Ausführungsform können zusätzlich zu den Radardaten 103 der Radarsensoreinheit 101 die oben beschriebenen zusätzlichen Sensorinformationen der zusätzlichen Sensoren in der Wanddiagnose des Diagnosemoduls 107 berücksichtigt werden. Eine entsprechende Vorverarbeitung der zusätzlichen Sensorinformationen durch das Vorverarbeitungsmodul 127 kann entsprechend ausgeführt werden.

In der gezeigten Ausführungsform umfasst das Diagnosemodul 107 ein Wandtypklassifizierungsmodul 129 und ein Objekterkennungsmodul 131. Das Vorverarbeitungsmodul 127 umfasst ein erstes Vorverarbeitungsmodul 135 und ein zweites Vorverarbeitungsmodul 137. Das erste Vorverarbeitungsmodul 135 umfasst eine S-Matrix Reduktion 155. Das zweite Vorverarbeitungsmodul 137 umfasst eine Hintergrundkorrektur 157, eine inverse Fast Fourier Transformation 159 und eine Fokussierung und Migration 161. In der Vorverarbeitung der Radardaten 103 durch das Vorverarbeitungsmodul 127 erfolgt zunächst eine Vorverarbeitung der Radardaten 103 durch das erste Vorverarbeitungsmodul 135 und die darin enthaltene S-Matrix Reduktion 155.

Das ersten Vorverarbeitungsmodul 135 erzeugt hierbei basierend auf den Radardaten 103 Eingabedaten 133. Die Eingabedaten 133 dienen als Eingabedaten für das Wandtypklassifizierungsmodul 129. Das Wandtypklassifizierungsmodul 129 führt hierbei basierend auf den Eingabedaten 133 eine Wandtypenklassifizierung der zu untersuchenden Wand 105 aus und generiert eine Wandtypinformation 139. In der Wandtypinformation 139 ist der in der Wandtypenklassifizierung bestimmte Wandtyp 123 der zu untersuchenden Wand 105 enthalten.

Darauffolgend wird das zweite Vorverarbeitungsmodul 137 basierend auf den Radardaten 103 und der Wandtypinformation 139 eine Vorverarbeitung ausgeführt. Hierbei wird unter Berücksichtigung des in der Wandtypinformation 139 ermittelten Wandtyps 123 eine Hintergrundkorrektur 157 der Radardaten 103 ausgeführt. Je nach Wandtyp 123 der zu untersuchenden Wand 105 können unterschiedliche Effekte auf die Radardaten 103 auftreten.

Durch die Hintergrundkorrektur 157 können diese Effekte, die primär auf dem jeweiligen Wandtyp 123 basieren und eine Objekterkennung beeinflussen können, korrigiert werden. Nach ausgeführter Hintergrundkorrektur kann durch Ausführung der inversen Fast Fourier Transformation 159 bzw. der Fokussierung und Migration 161 eine weitere Vorverarbeitung ausgeführt werden und erneute Eingabedaten 133 für das Objekterkennungsmodul 131 erstellt werden. Basierend auf den durch das zweite Vorverarbeitungsmodul 137 bereit gestellten Eingabedaten 133 führt das Objekterkennungsmodul 133 die Objekterkennung des in der zu untersuchenden Wand 105 angeordneten Objekts 113 aus und bestimmt wenigstens die Objektposition 115 und den Objekttyp 117 des jeweiligen Objekts 113. Zusätzlich kann durch das Objekterkennungsmodul 131 die Objekttiefe 119 und die Objektausdehnung 121 bestimmt werden.

Nach einer Ausführungsform ist das Diagnosemodul ferner eingerichtet, basierend auf den Radardaten eine Objekttiefe des Objekts innerhalb der Wand zu bestimmen, wobei die Objekttiefe durch einen Abstand des in der Wand ausgebildeten Objekts zu einer Oberfläche der Wand definiert ist.

Die Vorverarbeitung ist hierbei optional. In Abhängigkeit des für das Diagnosemodul 107 verwendeten Algorithmus können komplett unverarbeitete Radarechos verschiedener Frequenzen als Radardaten 103 und als Eingabedaten für das Diagnosemodul 107 genutzt werden. Alternativ können über mehrere Schritte verarbeitete Radardaten 103 vorverwendet werden. Die Vorverarbeitungsschritte umfassen hierbei beispielsweise die Transformation der Signale vom Frequenzraum in den Zeit- oder Distanzraum, Hintergrundabzug, Entrauschung und Normalisierung der Signale. Bei Radardaten 103, die in Form von komplexen Zahlen vorliegen, kann ausschließlich der Absolutwert verarbeitet werden. Alternativ oder zusätzlich können die Phaseninformation berücksichtigt werden.

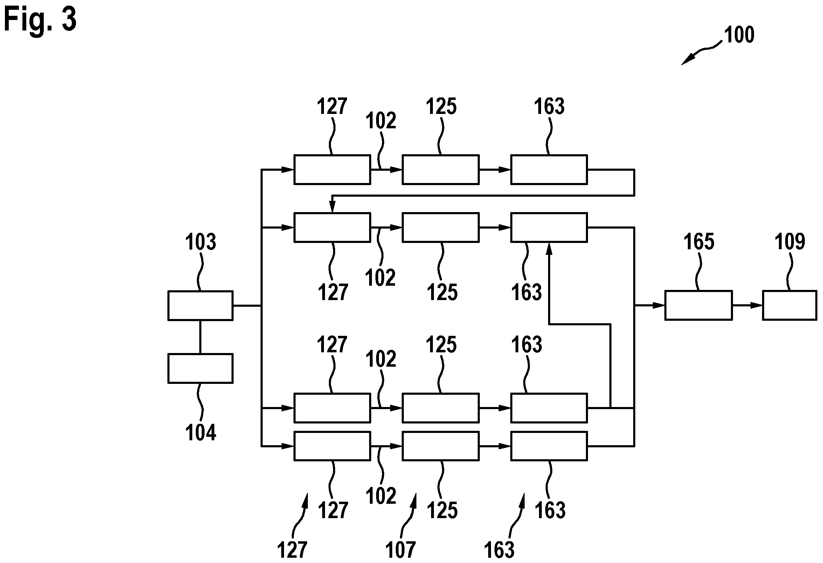

Fig. 3 zeigt eine weitere schematische Darstellung des Messgeräts 100 gemäß einer weiteren Ausführungsform.

In der gezeigten Ausführungsform umfasst das Diagnosemodul 107 eine Mehrzahl von parallel verlaufenden Verarbeitungspfaden 102. In jedem Verarbeitungspfad 102 ist ein Vorverarbeitungsmodul 127, das Diagnosemodul 107, beispielsweise umfassend das Wandtypklassifizierungsmodul 129 und/oder das Objekterkennungsmodul 131 gemäß der Ausführungsform in Fig, 2, und ein Nachverarbeitungsmodul 163.

In Fig. 3 werden primär die Radardaten 103 als Eingabedaten für die Wanddiagnose dargestellt. Zuzüglich zu den gezeigten Radardaten können jedoch auch die Zusatzinformationen der zusätzlichen Sensoren als Eingabedaten für die Wanddiagnose dienen. Hierbei können die unterschiedlichen Informationen der verschiedenen Sensortypen in den verschiedenen parallelen Verarbeitungspfaden 102 verarbeitet werden und die entsprechende Wanddiagnose getrennt auf den unterschiedlichen Sensorinformationen ausgeführt werden. Nach Abschluss der Wanddiagnose kann über ein Zusammenfassungsmodul eine Zusammenfassung der einzelnen Teilanalyseergebnisse zu den Diagnoseergebnissen 109 der Wanddiagnose zusammengefügt werden.

Alternativ oder zusätzlich können durch die verschiedenen Verarbeitungspfade 102 auch basierend auf den gleichen Sensorinformationen unterschiedliche Teilaspekte der Wanddiagnose durchgeführt werden.

Die einzelnen Verarbeitungspfade 102 können hierbei beispielsweise unterschiedliche Radardaten 103 verarbeiten, die während des Bewegens des Messgeräts 100 relativ zur Wand 105 für verschiedene Positionen des Messgeräts 100 relativ zur Wand 105 aufgenommen wurden. Die Radardaten 103, die somit unterschiedliche Bereiche der Wand 105 abbilden und zeitlich nacheinander während des Bewegens des Messgeräts 100 relativ zur Wand 105 aufgenommen wurde, können dann in den verschiedenen Verarbeitungspfaden 102 durch die gezeigten Module verarbeitet werden.

Die verschiedenen Verarbeitungspfade führen hierbei eine eigenständige Wanddiagnose durch, die wenigstens das Bestimmen der Objektposition 115 und/oder des Objekttyps 117 des in der Wand 105 angeordneten Objekts 113 umfassen.

Durch das Zusammenfassungsmodul 165 können die in den einzelnen Verarbeitungspfaden 102 bereitgestellten Teilergebnisse der eigenständigen Wanddiagnosen der unterschiedlichen Bereiche der Wand 105 einem zusammenhängenden Diagnoseergebnis 109 zusammengefasst werden. Das zusammenhängende Diagnoseergebnis beschreibt hierbei die Wanddiagnose eines zusammenhängenden Raumbereichs, der während des Bewegens des Messgeräts 100 relativ zur Wand 105 überstrichen und durch die entsprechenden aufgenommenen Radardaten 103 abgebildet wurde. Die parallele Verarbeitung der Radardaten 103 bzw. der zusätzlichen Sensorinformationen 104 der zusätzlichen Sensorelemente in den verschiedenen Verarbeitungspfaden 102 ermöglicht somit eine beschleunigte Wanddiagnose.

Alternativ hierzu können in den unterschiedlichen Verarbeitungspfaden 102 auch verschiedene Funktionen der Wanddiagnose ausgeführt werden. So kann beispielsweise in einem Verarbeitungspfad 102 die Wandtypenklassifizierung und das Bestimmen des Wandtypen 123 der zu untersuchenden Wand 105 ausgeführt werden. In einem weiteren Verarbeitungspfad 102 kann die Objekterkennung des in der Wand angeordneten Objekts 113 ausgeführt werden. Hierbei können die Objektdetektion mit der Bestimmung der Objektposition 115 und die Objektklassifikation mit der Bestimmung des Objekttypens 113 in einem Verarbeitungspfad 102 ausgeführt werden.

Alternativ hierzu kann dann auch die Objektdetektion und die Objektklassifikation in zwei getrennten Verarbeitungspfaden 102 ausgeführt werden. In weiteren Verarbeitungssträngen 102 können jeweils die Objekttiefenbestimmung, sprich die Bestimmung der Objekttiefe 119, und/oder die Bestimmung der Objektausdehnung 121 bewirkt werden. In dem Zusammenfassungsmodul 165 können die verschiedenen Teilergebnisse der Wanddiagnose in entsprechende Diagnoseergebnisse 109 zusammengefasst werden.

Das Diagnosemodul 107 kann hierbei in unterschiedliche künstliche Intelligenzen 125 aufgeteilt sein, wie dies bereits in der Ausführungsform in Fig. 2 dargestellt ist. Das Diagnosemodul 107 kann hierbei beispielsweise ein Wandtypenklassifizierungsmodul 129 und ein Objekterkennungsmodul 131 umfassen. Das Objekterkennungsmodul kann wiederum in ein Objektdetektionsmodul und ein Objektklassifikationsmodul aufteilt sein. Das Diagnosemodul 107 kann ferner ein Objekttiefenbestimmungsmodul und Objektausdehnungsmodul umfassen, die jeweils eingerichtet sind, die Objekttiefe 119 und die Objektausdehnung 121 zu bestimmen.

Die entsprechenden Module können jeweils als eigenständige künstliche Intelligenzen 125, beispielsweise neuronale Netze, ausgebildet sein. Alternativ können die verschiedenen Module Teile eines gesamten künstlichen neuronalen Netzes bilden, die gemäß aus dem Stand der Technik bekannten Strukturen zu einem gesamten neuronalen Netz verbunden sind.

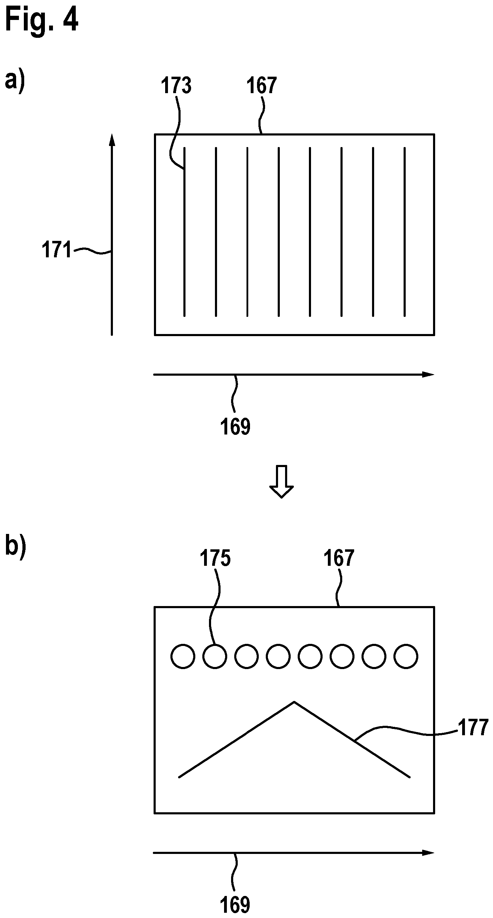

Fig. 4 zeigt eine schematische Darstellung einer Messung des Messgeräts 100 gemäß einer Ausführungsform.

Zur Vorverarbeitung können die Radardaten 103 bzw. die zusätzlichen Sensorinformationen 104 der übrigen Sensoren insbesondere zur numerischen Stabilisierung der nachfolgenden durch das Diagnosemodul 107 während der Wanddiagnose ausgeführten Schritte normalisiert werden. Hierzu können beispielsweise eine Amplitude und/oder Off-set-Kompensation ausgeführt werden. Ferner können zur Reduktion von Störelementen Filterung der Radardaten 103 und zur Reduktion der Datenrate die entsprechenden Sensordaten herabgetastet werden. Ferner können die Radardaten 103 bzw. die zusätzlichen Sensorinformationen 104 in den jeweilig benötigten Frequenzbereich bzw. Zeitbereich transformiert werden. Hierzu können aus dem Stand der Technik bekannte Verfahren angewendet werden.

Ferner können die aufgenommenen Radardaten 103 bzw. zusätzlichen Sensorinformationen 104 in zeitliche oder räumliche Fenster 167 aufgeteilt werden. Zeitliche Fenster 167 können hierbei durch das Aufnehmen der Radardaten 103 bzw. der zusätzlichen Sensorinformationen bzw. der vorverarbeiteten Radardaten 103 über ein festes Zeitintervall generiert werden. Räumliche Fenster 167 können hingegen aus einer Zuordnung der Radardaten 103 bzw. zusätzlichen Sensorinformationen 104 zu Positionen des Messgeräts 100 relativ zur Wand 105 entlang der Bewegungsrichtung 153 generiert werden.

Grafik a) der Fig. 4 zeigt eine derartige aus den oben beschriebenen Schritten ergebende Datenmatrix. Die in Grafik a) gezeigte Datenmatrix des Fensters 167 zeigt eine Mehrzahl von Sensordaten 173, die beispielsweise Radardaten 103 oder zusätzlichen Sensorinformationen 104 der weiteren Sensoren umfassen können, die entlang einer Frequenzkanalachse 171 bzw. entlang einer Raum-/Zeitachse 169 aufgetragen sind.

Eine Breite der zeitlichen Fenster 167 kann hierbei derart gewählt werden, dass unterschiedliche Abtastraten der Sensoren ausgeglichen werden können und häufig genug ein neues Fenster 167 bereitgestellt werden kann, sodass eine Anzeige der Diagnoseergebnisse 109 der Wanddiagnose in der Anzeigeeinheit 111 ohne eine zu große zeitliche Verzögerung während der durchgeführten Messung oder kurz nach Beendigung der Messung des Messgeräts 100 erfolgen kann.

Hierzu kann eine Rate von 2 bis 20 Fenster pro Sekunde der Datenaufnahme der Sensordaten 173 vorteilhaft sein. Für räumliche Fenster können die räumlichen Abtastraten derart gewählt werden, dass die gewünschte örtliche Genauigkeit erreicht werden kann. Vorteilhaft können hierbei 1 mm bis 1 cm Abtastraten sein. Dies bedeutet, dass alle 1 mm bis 1 cm einer Bewegung des Messgeräts 100 entlang der Bewegungsrichtung 153 entsprechende Sensordaten 173 aufgenommen werden.

Eine Breite der räumlichen Fenster 167 kann derart gewählt werden, dass zusammenhängende Informationen zu einem Objekt 113 in einem Fenster enthalten sind. Vorteilhaft kann hierbei eine Breite von 1 cm bis 20 cm der jeweiligen räumlichen Fenster 167 sein. Hieraus ergeben sich 4 bis 100 Messwerte pro Fenster 167. Dies ermöglicht eine weitere effiziente algorithmische Verarbeitung der entsprechend aufgenommenen Radardaten 103 bzw. zusätzlichen Sensorinformationen durch das Diagnosemodul 107.

Ein weiteres zeitliches Fenster 167 bzw. räumliches Fenster 167 kann hierbei bereitgestellt werden, sobald einer oder mehrere Abtastpunkte zur Verfügung stehen.

Das Diagnosemodul 107 kann derart ausgerichtet sein, dass als Eingabedaten, beispielsweise auch eines jeden Verarbeitungspfad 102 der Ausführungsform in Figur 3, eine der Fenstergröße des jeweiligen räumlichen oder zeitlichen Fensters 167 entsprechende Matrix als Eingabedaten aufzunehmen. Die entsprechenden Eingabedaten können hierbei gemäß der Ausführungsform der Figur 2 die jeweils vorverarbeiteten Sensordaten, sprich Radardaten 103 und zusätzliche Sensorinformationen 104 der zusätzlichen Sensoren, umfassen.

Wie oben ausgeführt, kann die Wanddiagnose durch das Diagnosemodul 107 basierend auf einer entsprechend trainierten künstlichen Intelligenz ausgeführt werden. Alternativ können auch verschiedene Verarbeitungspfade durch Regelbasierte Algorithmen berechnet werden. Auch ist innerhalb eines Verarbeitungspfads 102 eine Kombination aus künstlicher Intelligenz und regelbasiertem Algorithmus in Form einer Parallelschaltung oder Verkettung möglich.

Die Diagnoseergebnisse 109 der Wanddiagnose können als Zahlenwerte, Vektoren oder Matrizen ausgeprägt sein. Ferner kann für die Objektdetektion die Wahrscheinlichkeit einer Detektion, bzw. für die Wandtypenklassifikation bzw. die Objektklassifikation eine Wahrscheinlichkeit der angegebenen Objektklassen bzw. Wandtypenklassen angegeben sein. Gleiches kann für die Positions- und/oder Tiefenbestimmung gelten, für die ebenfalls entsprechende Wahrscheinlichkeitswerte angegeben werden können.

Werden neben den Radardaten 103 die zusätzlichen Sensorinformationen der weiteren Sensortypen in einem Verarbeitungspfad 102 verarbeitet, so können diese entweder innerhalb der künstlichen Intelligenz 125 zusammengeführt oder durch regelbasierte Kombinationen kombiniert werden.

In der Nachverarbeitung jedes Verarbeitungspfads 102, der Ausführungsform in Fig. 3, können mehrere Algorithmusergebnisse, die auf mehreren Fenstern 167 basieren, durch das Zusammenfassungsmodul 165 zusammengefasst werden. Diese Zusammenfassung kann insbesondere durch Mehrheitsbildung, Summenbildung oder auch Multiplikation aufeinanderfolgender Wahrscheinlichkeitswerte realisiert werden.

Ferner kann durch Clustern von mehreren Ergebnissen, beispielsweise von mehreren nahe beieinander liegend detektierten Objekten, erkannt werden, bei welchen Objekten es sich um dasselbe Objekt handelt, sodass diese nicht fälschlicherweise mehrfach erkannt werden.

Ebenso ist es möglich, bei der Zusammenfassung der Ergebnisse aus mehreren Fenstern 167 multiplikativ eine Gewichtungsfunktion 177 anzuwenden. Vorteilhafterweise können hierbei die Diagnoseteilergebnisse 175, die entsprechenden Datenpunkten im Raum entsprechen, mit Bezug auf eine Positionierung der Diagnoseteilergebnisse 175 relativ zu einem Mittelpunkt des jeweiligen Fensters 167 gewichtet werden. Diese ist beispielhaft in der Grafik b) dargestellt, in der die einzelnen Diagnoseteilergebnisse 175 gemäß der gezeigten Gewichtungsfunktion 177 mit Bezug auf den Mittelpunkt des gezeigten Fensters 167 gewichtet sind.

Gemäß einer Ausführungsform können die Ergebnisse eines Verarbeitungspfads 102 nach der Nachverarbeitung 163 auf die Erweiterung eines anderen Verarbeitungspfad 102 Einfluss nehmen. Hierbei können Gewichtungsparameter angepasst werden, die für jedes Fenster von dem jeweiligen Ergebnis aus dem Verarbeitungspfad 102 abhängen können.

Beispielsweise kann das Ergebnis einer Objektklassifikation, in der der Objekttyp 117 eines in der Wand 105 angeordneten Objekts definiert ist, genutzt werden, um das Gewicht einer Wandtypenklassifikation, in der der Wandtyp 123 der jeweiligen Wand 105 bestimmt wird, in der Nachverarbeitung an Stellen ohne Objekte 113 zu erhöhen, da die jeweiligen Radardaten 103 an diesen Stellen weniger durch Reflektionen der Objekte 113 beeinflusst sind.

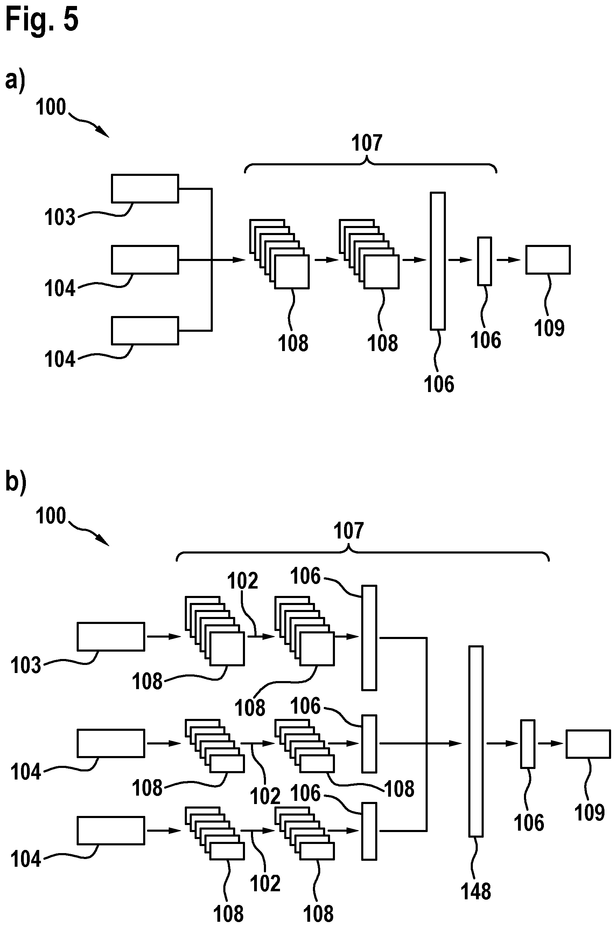

Fig. 5 zeigt eine weitere schematische Darstellung des Messgeräts 100 gemäß einer weiteren Ausführungsform.

Die Grafiken a) und b) der Fig. 5 zeigen zwei verschiedene Alternativen einer gemeinsamen Datenverarbeitung von Radardaten 103 und zusätzlichen Sensorinformationen 104 durch das Diagnosemodul 107.

In Grafik a) wird eine gemeinsame Verarbeitung der Radardaten 103 und der zusätzlichen Sensorinformationen 104 der zusätzlichen Sensoren durch das Diagnosemodul 107 dargestellt. Hierzu werden die Radardaten 103 und die zusätzlichen Sensorinformationen 104 gemeinsam als Eingabedaten des als künstliche Intelligenz, insbesondere als künstliches neuronales Netz, ausgebildet Diagnosemoduls 107 verwendet. Das Diagnosemodul 107 umfasst hier mehrere Faltungsschichten 108 und mehrere dichte Schichten 106. Über die Faltungsschichten 108 und die dichten Schichten 106 werden die Radardaten 103 und die zusätzlichen Sensorinformationen 104 gemeinsam als Eingabedaten verarbeitet. Als Ausgabedaten des Diagnosemoduls 107 werden hierauf basierend die oben bereits erwähnten Diagnoseergebnisse 109 erstellt.

In Grafik b) werden die Radardaten 103 und die zusätzlichen Sensorinformationen 104 hingegen als eigenständige Eingabedaten des Diagnosemoduls 107 verwendet. Das Diagnosemodul 107 wird zu mehrere Verarbeitungspfade 102. Die Verarbeitungspfade 102 umfassen jeweils mehrere Faltungsschichten 108 und wenigstens eine dichte Schicht 106. In den verschiedenen Verarbeitungspfaden 102 wird basierend auf den Radardaten 103 bzw. den zusätzlichen Sensorinformationen 104 getrennt voneinander jeweils eine Wanddiagnose durch das Diagnosemodul 107 erstellt.

In einer zusätzlichen Verkettungsschicht 148 werden die Teilergebnisse der Teildiagnosen der verschiedenen Verarbeitungspfade 102 zusammengefügt und einer letzten dichten Schicht 106 zugeführt. Die Ausgabedaten des Diagnosemoduls 107 entsprechen den oben beschriebenen Diagnoseergebnissen 109.

Das entsprechend ausgebildete Diagnosemodul 107 ist eingerichtet, basierend auf den Radardaten 103 und den zusätzlichen Sensorinformationen 104 eine wie oben beschriebene Wanddiagnose mit den oben beschriebenen Merkmalen auszuführen.

In der gezeigten Ausführungsform ist das Diagnosemodul 107 als ein künstliches neuronales Netz, insbesondere als ein Faltungsnetzwerk, ausgebildet. Entsprechende Netzwerkarchitekturen mit Faltungsschichten 108, dichten Schichten 106 und Verkettungsschichten 148 sind aus dem Stand der Technik bekannt.

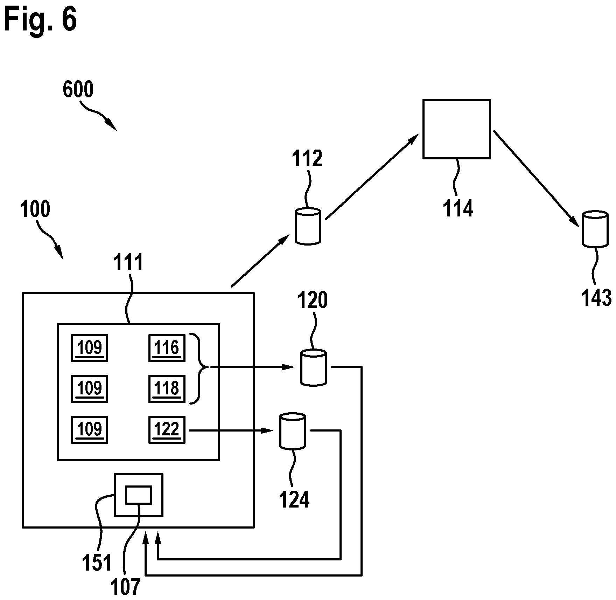

Fig. 6 zeigt eine schematische Darstellung eines Systems 600 zum Betreiben eines Messgeräts 100 gemäß einer Ausführungsform.

In der gezeigten Ausführungsform umfasst das System 600 zum Betreiben des Messgeräts 100 neben dem Messgerät 100 eine externe Servereinheit 114.

Das Messgerät 100 ist erfindungsgemäß eingerichtet, durch das Diagnosemodul 107 basierend auf den Radardaten 103 der Radarsensoreinheit 101, und gegebenenfalls unter Berücksichtigung der zusätzlichen Sensorinformationen 104, die Wanddiagnose der zu untersuchenden Wand 105 inklusive der darin angeordneten Objekte 113 auszuführen.

Die Wanddiagnose umfasst hierbei erfindungsgemäß wenigstens das Bestimmen des Wandtyps 123 der Wand 105 und/oder das Bestimmen der Objektposition 115 und/oder des Objekttyps 117 des wenigstens einen in der Wand angeordneten Objekts 113. Die entsprechend bereitgestellten Diagnoseergebnisse 109 umfassen somit wenigstens den bestimmten Wandtyp 123 und/oder die bestimmte Objektposition 115 bzw. den Objekttyp 117.

Alternativ kann die Wanddiagnose auch die Bestimmung der Objekttiefe 119 und/oder der Objektausdehnung 121 umfassen.

Erfindungsgemäß werden durch das Messgerät 100 Feedbackinformationen 112 ermittelt. Die Feedbackinformation 112 beschreiben hierbei eine Übereinstimmung der Diagnoseergebnisse 109 mit einem aktuellen Zustand der Wand 105. Der aktuelle Zustand der Wand 105 betrifft hierbei den tatsächlich vorliegenden Wandtyp 123 und/oder die tatsächlich vorliegende Objektposition 115 bzw. den tatsächlichen Objekttyp 117 des wenigstens einen in der Wand angeordneten Objekts 113.

In der gezeigten Ausführungsform werden die Feedbackinformationen 112 des Messgeräts 100 der externen Servereinheit 114 bereitgestellt. Die externe Servereinheit 114 ist hierbei darauf eingerichtet, die Feedbackinformationen 112 für eine Verbesserung der Software des Diagnosemoduls 107, beispielsweise durch ein erneutes Training des Diagnosemoduls 107, zu verwenden. Insbesondere ist die externe Servereinheit 114 eingerichtet, unter Berücksichtigung der Feedbackinformationen 112 einen Trainingsdatensatz 143 für das erneute Training des Diagnosemoduls 107 zu erzeugen.

Gemäß einer Ausführungsform können durch das Messgerät 100 der externen Servereinheit 114 neben den Feedbackinformationen 112 die Radardaten 103 bereitgestellt werden, auf denen basierend durch das Diagnosemodul 107 die Wanddiagnose ausgeführt wurde, zu denen durch den Nutzer / die Nutzerin des Messgeräts die Feedbackinformationen 112 bereitgestellt wurden.

In der gezeigten Ausführungsform stellt das Messgerät 100 ferner eine erste Auswahlfunktion 116 und eine zweite Auswahlfunktion 118 bereit.

Durch die erste Auswahlfunktion 116 kann der Nutzer / die Nutzerin des Messgeräts 100 aus einer Mehrzahl von durch das Messgerät 100 bereitgestellten möglichen Wandtypen 123 und/oder einer Mehrzahl von möglichen Objektpositionen 115 und/oder einer Mehrzahl von möglichen Objekttypen 117 und/oder einer Mehrzahl von möglichen Objekttiefen 119 und/oder einer Mehrzahl von möglichen Objektausdehnungen 121, die während der Wanddiagnose durch das Diagnosemodul 107 als Diagnoseergebnisse 109 bereitgestellt werden, einen Wandtyp 123 und/oder eine Objektposition 115 und/oder einen Objekttyp 117 und/oder eine Objekttiefe 119 und/oder eine Objektausdehnung 121 auswählen. Der Nutzer / die Nutzerin kann somit durch Betätigung der ersten Auswahlfunktion 116 die Diagnoseergebnisse 109 auswählen, die seiner/ihrer Meinung nach den tatsächlichen Zustand der Wand 105 am besten wiedergeben.

Mittels der zweiten Auswahlfunktion 118 kann der Nutzer / die Nutzerin die automatische Wandtypbestimmung deaktivieren. Ferner kann der Nutzer / die Nutzerin händisch einen vorliegenden Wandtyp 123 eingeben.

In der gezeigten Ausführungsform stellt das Messgerät 100 ferner eine Feedbackfunktion 122 bereit. Über die Feedbackfunktion 122 kann der Nutzer / die Nutzerin ein direktes Feedback über die Übereinstimmung der Wanddiagnose mit dem tatsächlichen Zustand der Wand 105 eingeben.

Hierzu werden von dem Diagnosemodul 107 die durch den Nutzer / die Nutzerin eingegebenen Auswahlbefehle 120 der ersten und zweiten Auswahlfunktion 116, 118 empfangen. Die Auswahlbefehle 120 beschreiben hierbei die durch den Nutzer / die Nutzerin durch Betätigung der ersten Auswahlfunktion 116 und/oder zweiten Auswahlfunktion 118 getätigten Auswahlen der durch das Diagnosemodul 107 bereitgestellten Diagnoseergebnisse 109 bzw. die Beendigung der automatischen Ausführung der Wandtypbestimmung.

Ferner können durch das Diagnosemodul 107 entsprechende Feedbackbefehle 124 der Feedbackfunktion 122 empfangen werden. Die Feedbackbefehle 124 umfassen hierbei die durch den Nutzer / die Nutzerin durch Betätigung der Feedbackfunktion 122 bereitgestellten Feedbackinformationen 112.

Neben den Feedbackbefehlen 124 ist das Messgerät 100 eingerichtet, die Feedbackinformation 112 basierend auf den Auswahlbefehlen 120 der ersten und zweiten Auswahlfunktion 116, 118 zu bestimmen. Beispielsweise wird bei der Bereitstellung von einer Mehrzahl von möglichen Wandtypen 123 durch die Auswahl eines der Wandtypen 123 der jeweils ausgewählte Wandtyp 123 mit einem positiven Feedback belegt, während die nicht ausgewählten Wandtypen 123 entsprechend negativ bewertet werden. Entsprechend wird bei Betätigung der zweiten Auswahlfunktion 118, in der die automatische Wandtypbestimmung deaktiviert wird, ein negatives Feedback bezüglich der Wandtypbestimmung registriert. Entsprechendes gilt für die Auswahlen der weiteren Diagnoseergebnisse 109.

Gemäß einer Ausführungsform ist das Diagnosemodul 107 ferner eingerichtet, bei wiederholt ausgeführten Wanddiagnosen, die jeweils an gleichen Positionen des Messgeräts 100 relativ zur Wand 105 ausgeführt wurden, Abweichungen zwischen den wiederholt ausgeführten Wanddiagnosen bzw. den während der Wanddiagnosen Diagnoseergebnissen 109 zu ermitteln.

Ferner ist das Messgerät 100 eingerichtet, die entsprechenden Abweichungen in der Anzeigeeinheit 111 anzuzeigen. Über die Betätigung der Feedbackfunktion 122 kann der Nutzer / die Nutzerin mit entsprechenden Feedbackbefehlen 124 die Abweichungen bestätigen oder widerlegen.

Die Auswahlbefehle 120 und/oder die Feedbackbefehle 124 können beispielsweise durch die Bedienelemente 154 eingegeben werden. Alternativ hierzu kann die Anzeigeeinheit 111 beispielsweise als ein Touchscreen ausgebildet sein, über den die Auswahlbefehle 120 und/oder Feedbackbefehle 124 durch den Nutzer / die Nutzerin eingegeben werden können.

Die Ermittlung der Abweichungen der Diagnoseergebnisse 109 der verschiedenen Wanddiagnosen für die gleiche Position des Messgeräts 100 relativ zur Wand 105 kann durch das Diagnosemodul 107 beispielsweise durch Vergleichsprozesse der in den verschiedenen Wanddiagnosen zu unterschiedlichen Zeitpunkten ermittelten Diagnoseergebnisse 109 bewirkt werden. Hierzu kann das Diagnosemodul 107 ein entsprechend eingerichtetes Vergleichsmodul umfassen.

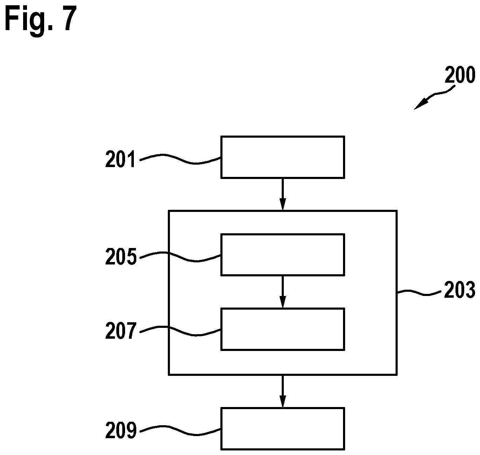

Fig. 7 zeigt ein Flussdiagramm eines Verfahrens 200 zum Betreiben eines Messgeräts 100 gemäß einer Ausführungsform.

Zum Betreiben des Messgeräts 100 werden in einem Verfahrensschritt 201 zunächst die zu diagnostizierende Wand 105 abbildende Radardaten 103 der Radarsensoreinheit 101 des Messgeräts 100 empfangen.

In einem weiteren Verfahrensschritt 203 wird durch das Diagnosemodul 107 die Wanddiagnose basierend auf den Radardaten 103 ausgeführt und es werden Diagnoseergebnisse 109 bereitgestellt.

Hierzu wird in einem Verfahrensschritt 205 durch das Diagnosemodul 107 eine Wandtypenklassifikation ausgeführt und es wird der Wandtyp 123 der Wand 105 ermittelt.

In einem weiteren Verfahrensschritt 207 wird durch das Diagnosemodul 107 eine Objekterkennung des wenigstens einen in der Wand 105 angeordneten Objekts 113 ausgeführt. Die Objekterkennung umfasst hierbei die Objektdetektion mit der Bestimmung der Objektposition 115 und die Objektklassifikation mit der Bestimmung des Objekttyps 117. Die durch das Diagnosemodul 107 bereitgestellten Diagnoseergebnisse 109 umfassen hierbei wenigstens die Objektposition 115 und/oder den Objekttyp 117 bzw. den Wandtyp 123.

Ferner werden in einem Verfahrensschritt 209 Feedbackinformationen 112 ermittelt. Die Feedbackinformationen 112 beschreiben hierbei die Übereinstimmung der Diagnoseergebnisse 109 mit dem aktuellen Zustand der Wand 105.

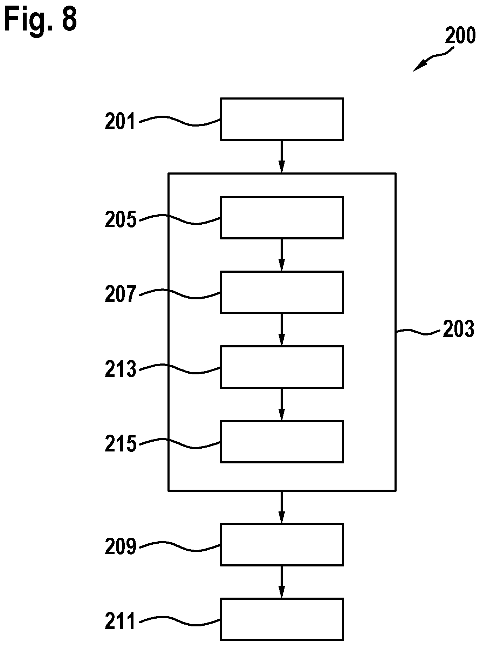

Fig. 8 zeigt ein weiteres Flussdiagramm des Verfahrens 200 zum Betreiben eines Messgeräts 100 gemäß einer weiteren Ausführungsform.

Die in Figur 8 gezeigte Ausführungsform basiert auf der Ausführungsform in Figur 7 und umfasst alle dort beschriebenen Verfahrensschritte.

In der gezeigten Ausführungsform umfasst die Wanddiagnose ferner das Ausführen der Objekttiefenbestimmung und das Bestimmen der Objekttiefe 119 des Objekts 113 in einem Verfahrensschritt 213.

Ferner wird in einem Verfahrensschritt 215 die Objektausdehnungsbestimmung ausgeführt und die Objektausdehnung 121 des Objekts 113 bestimmt.

Ferner werden in einem Verfahrensschritt 211 die Feedbackinformationen 112 an eine externe Servereinheit 114 zum Berücksichtigen der Feedbackinformationen 112 in einem Update des Diagnosemoduls 107 bereitgestellt.

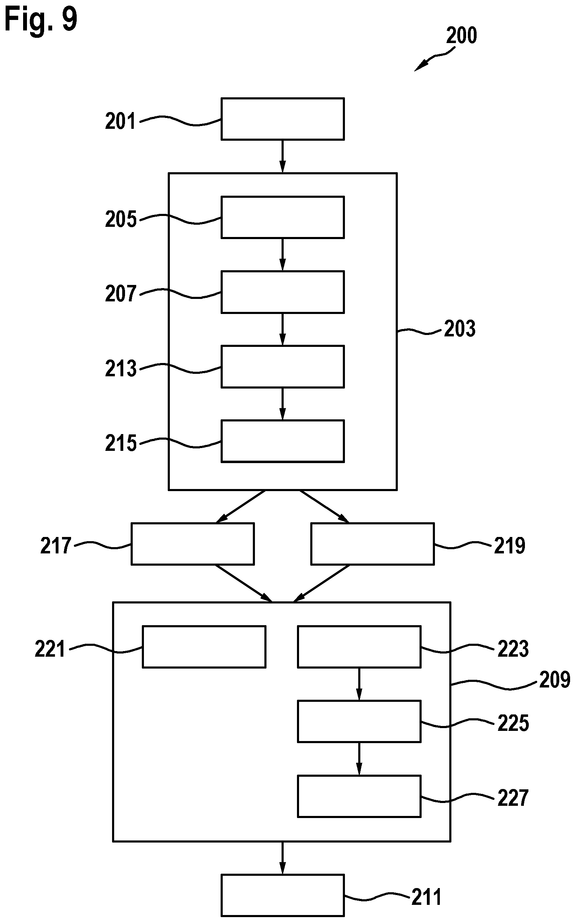

Fig. 9 zeigt ein weiteres Flussdiagramm des Verfahrens 200 zum Betreiben eines Messgeräts 100 gemäß einer weiteren Ausführungsform.

Die Ausführungsform in Figur 9 basiert auf der Ausführungsform in Figur 8 und umfasst alle dort angeführten Verfahrensschritte.

In der gezeigten Ausführungsform wird in einem Verfahrensschritt 217 die erste Auswahlfunktion 116 und/oder die zweite Auswahlfunktion 118 bereitgestellt.

Durch Ausführen der ersten Auswahlfunktion 116 kann aus der Mehrzahl von im Zuge der Wanddiagnose bereitgestellten möglichen Wandtypen 123 und/oder möglichen Objektpositionen 115 und/oder möglichen Objekttypen 117 und/oder möglichen Objekttiefen 119 und/oder möglichen Objektausdehnungen 121 ein passender Wandtyp 123 und/oder eine passende Objektposition 115 und/oder ein passender Objekttyp 117 und/oder eine passende Objekttiefe 119 und/oder eine passende Objektausdehnung 121 ausgewählt werden.

Durch Ausführen der zweiten Auswahlfunktion 118 kann die automatische Wandtypbestimmung deaktiviert werden und der Wandtyp 123 händisch gewählt werden.

Ferner wird in einem weiteren Verfahrensschritt 219 die Feedbackfunktion 122 bereitgestellt. Durch Betätigung der Feedbackfunktion 122 können durch den Nutzer / die Nutzerin die Feedbackinformationen 112 bereitgestellt werden. Über die Feedbackinformationen 112 kann das Feedback bezüglich der Übereinstimmung der bereitgestellten Diagnoseergebnisse 109 mit dem tatsächlichen Zustand der Wand 105 bereitgestellt werden.

In der gezeigten Ausführungsform umfasst das Ermitteln 209 der Feedbackinformationen 112 ferner das Empfangen von Auswahlbefehlen 120 der ersten und/oder zweiten Auswahlfunktionen 116, 118 und/oder von Feedbackbefehlen 124 der Feedbackfunktion 122 und das Ermitteln der Feedbackinformationen 112 basierend auf den Auswahlbefehlen 120 und/oder den Feedbackbefehlen 124 in einem Verfahrensschritt 221.

Ferner wird in einem Verfahrensschritt 223 durch das Diagnosemodul 107 ermittelt, ob bei wiederholten Wanddiagnosen einer gleichen Position des Messgeräts 100 relativ zur Wand 105 Abweichungen der in der Wanddiagnose ermittelten Diagnoseergebnisse 109 bestehen.

In einem weiteren Verfahrensschritt 225 werden die Abweichungen in der Anzeigeeinheit 111 angezeigt.

In einem weiteren Verfahrensschritt 227 werden Feedbackbefehle 124 bezüglich der Abweichungen empfangen, wobei in den Feedbackbefehlen 124 die angezeigten Abweichungen bestätigt oder widerlegt werden.

Gemäß einer Ausführungsform werden in der externen Servereinheit 114 neben den Feedbackinformationen 112 die entsprechenden Radardaten 103 bereitgestellt, auf denen basierend die Wanddiagnose zuvor ausgeführt wurde. Die Feedbackinformationen 112 können der externen Servereinheit 114 durch eine Mehrzahl von Messgeräten 100 bereitgestellt werden, die sich in Gebrauch von Nutzern / Nutzerinnen befinden.

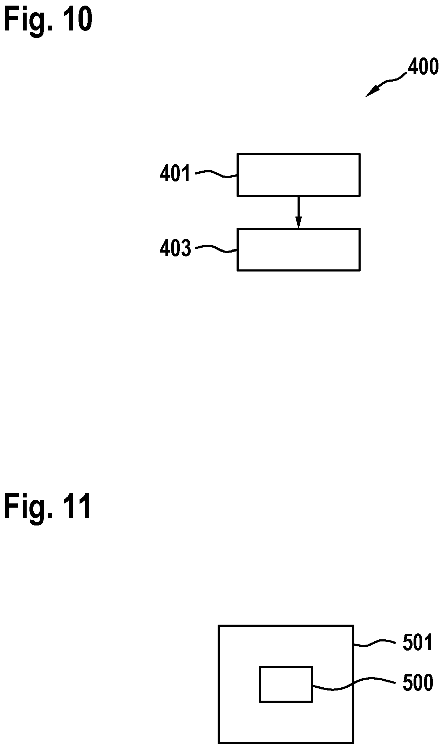

Fig. 10 zeigt ein Flussdiagramm eines Verfahrens 400 zum Trainieren einer künstlichen Intelligenz 125 eines Messgeräts 100 gemäß einer Ausführungsform.

Zum Trainieren der künstlichen Intelligenz wird in einem ersten Verfahrensschritt 401 zunächst der gemäß dem Verfahren 200 erzeugte Trainingsdatensatz 143 bereitgestellt, wobei der Trainingsdatensatz 143 die die zu diagnostizierende Wand 105 und das wenigstens eine in der Wand 105 ausgebildetes Objekt 113 abbildende Radardaten 103 und die nach dem Verfahren 200 zum Betreiben eines Messgeräts 100 nach einer der voranstehenden Ausführungsformen bereitgestellten Feedbackinformationen 112 umfasst.

In einem weiteren Verfahrensschritt 403 wird die künstliche Intelligenz 125 basierend auf dem Trainingsdatensatz 143 und unter Berücksichtigung der Feedbackinformationen 112 zum Ausführen einer Objekterkennung eines in einer Wand 105 ausgebildeten Objekts 113 trainiert. Das Training wird hierbei derart ausgeführt, dass durch die entsprechend trainierte künstliche Intelligenz in Ausführung der Wanddiagnose die Feedbackinformationen 112 berücksichtigt werden.

Fig. 11 zeigt eine schematische Darstellung eines Computerprogrammprodukts 500, umfassend Befehle, die bei der Ausführung des Programms durch eine Datenverarbeitungseinheit diese veranlassen, das Verfahren 200 zum Betreiben eines Messgeräts 100 und/oder das Verfahren 400 zum Trainieren einer künstlichen Intelligenz 125 auszuführen.

Das Computerprogrammprodukt 500 ist in der gezeigten Ausführungsform auf einem Speichermedium 501 gespeichert. Das Speichermedium 501 kann hierbei ein beliebiges aus dem Stand der Technik bekanntes Speichermedium sein.

## Patentansprüche

1. Computerimplementiertes Verfahren (200) zum Betreiben eines Messgeräts (100), insbesondere eines Wanddiagnosegeräts, umfassend:
Empfangen (201) von Radardaten (103) einer Radarsensoreinheit (101) des Messgeräts (100), wobei die Radardaten (103) eine zu diagnostizierende Wand (105) abbilden;
Ausführen (203) einer Wanddiagnose durch Ausführen einer Analyse der Radardaten (103) und Bereitstellen von Diagnoseergebnissen (109) durch ein Diagnosemodul (107) des Messgeräts (100), wobei die Wanddiagnose umfasst:
Ausführen (205) einer Wandtypenklassifikation und Bestimmen eines Wandtyps (123) der Wand (105) durch das Diagnosemodul (107), wobei die Diagnoseergebnisse (109) wenigstens den Wandtyp (123) der Wand (105) umfassen; und/oder
Ausführen (207) einer Objekterkennung eines in der Wand (105) angeordneten Objekts (113) durch das Diagnosemodul (107), wobei die Objekterkennung eine Objektdetektion und eine Objektklassifikation und
ein Bestimmen einer Objektposition (115) in der Wand (105) und eines Objekttyps (117) des Objekts (113) umfasst, und wobei die Diagnoseergebnisse (109) wenigstens die Objektposition (115) und/oder den Objekttyp (117) umfassen;
Ermitteln (209) von Feedbackinformationen (112), wobei die Feedbackinformationen (112) eine Übereinstimmung der Diagnoseergebnisse (109) mit einem aktuellen Zustand der Wand (105) beschreiben.

2. Verfahren (200) nach Anspruch 1, ferner umfassend:
Bereitstellen (211) der Feedbackinformationen (112) an eine externe Servereinheit (114) zum Berücksichtigen der Feedbackinformationen (112) in einem Update des Diagnosemoduls (107).

3. Verfahren (200) nach Anspruch 2, wobei zusätzlich zu den Feedbackinformationen (112) die entsprechenden Radardaten (103) der externen Servereinheit (114) bereitgestellt werden.

4. Verfahren (200) nach einem der voranstehenden Ansprüche, wobei das Ausführen (203) der Wanddiagnose ferner umfasst:
Ausführen (213) einer Objekttiefenbestimmung und Bestimmen einer Objekttiefe (119) des Objekts (113) in der Wand (105) durch das Diagnosemodul (107), wobei die Objekttiefe (119) als ein Abstand des Objekts (113) zu einer Oberfläche der Wand (105) definiert ist; und/oder Ausführen (215) einer Objektausdehnungsbestimmung und Bestimmen einer Objektausdehnung (121) des Objekts (113) entlang einer vordefinierten Richtung durch das Diagnosemodul (107), wobei die Diagnoseergebnisse (109) ferner wenigstens die Objekttiefe (119) und/oder die Objektausdehnung (121) des Objekts (113) umfassen.

5. Verfahren (200) nach einem der voranstehenden Ansprüche, wobei in der Objekterkennung eine Mehrzahl von möglichen Objektpositionen (115) und/oder eine Mehrzahl möglicher Objekttypen (117) des Objekts (113) als eigenständige Diagnoseergebnisse (109) bestimmt werden, und/oder wobei in der Wandtypenklassifikation eine Mehrzahl von möglichen Wandtypen (123) der Wand (105) als eigenständige Diagnoseergebnisse (109) bestimmt werden, und/oder wobei in der Objekttiefenbestimmung eine Mehrzahl von möglichen Objekttiefen (119) als eigenständige Diagnoseergebnisse (109) bestimmt werden und/oder wobei in der Objektausdehnungsbestimmung eine Mehrzahl von möglichen Objektausdehnungen (121) des Objekts (113) als eigenständige Diagnoseergebnisse (109) bestimmt werden, wobei jedes der mehreren Diagnoseergebnisse (109) in einer Anzeigeeinheit (111) des Messgeräts (100) angezeigt werden.

6. Verfahren (200) nach Anspruch 5, ferner umfassend:
Bereitstellen (217) einer ersten Auswahlfunktion (116) und/oder einer zweiten Auswahlfunktion (118), wobei durch Ausführen der ersten Auswahlfunktion (116) durch einen Nutzer / eine Nutzerin des Messgeräts (100) wenigstens einer der angezeigten Wandtypen (123) und/oder eine der angezeigten Objektpositionen (115) und/oder Objekttypen (117) und/oder Objekttiefen (119) und/oder Objektausdehnungen (121) auswählbar ist, und/oder wobei durch Ausführen der zweiten Auswahlfunktion (118) durch den Nutzer / die Nutzerin des Messgeräts (100) die automatische Bestimmung des Wandtyps (123) während der Wanddiagnose und/oder das Anzeigen des automatisch bestimmten Wandtyps (123) in der Anzeigeeinheit (111) deaktivierbar ist und ein Wandtyp (123) durch den Nutzer / die Nutzerin manuell wählbar ist.

7. Verfahren (200) nach Anspruch 6, ferner umfassend:
Bereitstellen (219) einer Feedbackfunktion (122), wobei bei einer Ausführung der Feedbackfunktion (122) durch den Nutzer / die Nutzerin eine Übereinstimmung des angezeigten Wandtyps (123) und/oder der angezeigten Objektposition (115) und/oder des angezeigten Objekttyps (117) und/oder der angezeigten Objekttiefe (119) und/oder der angezeigten Objektausdehnung (121) mit dem tatsächlichen Wandtyp (123) und/oder der tatsächlichen Objektposition (115) und/oder des tatsächlichen Objekttyps (117) und/oder der tatsächlichen Objekttiefe (119) und/oder der tatsächlichen Objektausdehnung (121) bestimmbar ist.

8. Verfahren (200) nach Anspruch 6 oder 7, wobei das Ermitteln (209) der Feedbackinformation (112) umfasst:
Empfangen (221) von Auswahlbefehlen (120) der ersten und/oder zweiten Auswahlfunktion (116, 118) und/oder von Feedbackbefehlen (124) der Feedbackfunktion (122) und Ermitteln der Feedbackinformationen (112) basierend auf den Auswahlbefehlen (120) und/oder Feedbackbefehlen (124), wobei in den Auswahlbefehlen (120) gemäß der ersten und/oder zweiten Auswahlfunktionen (116, 118) entsprechende Auswahlen getroffen sind, und wobei in den Feedbackbefehlen (124) entsprechende durch den Nutzer / die Nutzerin bereitgestellte Feedbackinformationen (112) enthalten sind.

9. Verfahren (200) nach einem der voranstehenden Ansprüche, wobei das Ermitteln (209) der Feedbackinformationen (112) umfasst:
Ermitteln (223) durch das Diagnosemodul (107), ob bei wiederholten Diagnosen einer gleichen Position des Messgeräts (100) relativ zur Wand (105) Abweichungen der in der Wanddiagnose ermittelten Diagnoseergebnisse (109) bestehen; und
Anzeigen (225) der Abweichungen in der Anzeigeeinheit (111); und
Empfangen (227) von Feedbackbefehlen (124) des Nutzers / der Nutzerin bezüglich der Abweichungen, wobei in den Feedbackbefehlen (124) die angezeigten Abweichungen bestätigt oder widerlegt werden.

10. Verfahren (200) nach einem der voranstehenden Ansprüche, wobei das Messgerät (100) ferner wenigstens einen Induktionssensor und/oder einen Wirbelstromsensor und/oder einen Kapazitätssensor und/oder Wechselstromsensor und/oder ein NMR-Sensor und/oder einen Ultraschallsensor zum Bereitstellen zusätzlicher Sensordaten umfasst, und wobei das Diagnosemodul (107) eingerichtet ist, die Wanddiagnose unter Berücksichtigung der zusätzlichen Sensordaten auszuführen.

11. Verfahren (200) nach einem der voranstehenden Ansprüche, wobei das Diagnosemodul (107) wenigstens eine entsprechend trainierte künstliche Intelligenz (125) umfasst, die eingerichtet ist, basierend auf den Radardaten (103) und/oder den zusätzlichen Sensordaten eine Objekterkennung und/oder eine Wandklassifikation und/oder eine Objekttiefenbestimmung und/oder eine Objektausdehnungsbestimmung durchzuführen.

12. Verfahren (200) nach einem der voranstehenden Ansprüche, wobei Objektklassen des Objekttyps (117) des Objekts (113) umfassen: Metall-/Nichtmetallobjekt, Kabel für Niederspannung, magnetische/nichtmagnetische Objekte, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nichtwassergefülltes Kunststoffrohr, beispielsweise Abwasserrohr, und/oder wobei die Wandtypklassen des Wandtyps (123) der Wand (105) umfassen: Betonwand, Leichtbau-/Trockenbauwand, gemauerte Wand und/oder von vermauerten Steinen der Wand, Fußbodenheizung, Wandheizung.

13. Verfahren (400) zum Trainieren einer künstlichen Intelligenz (125) eines Messgeräts (100) zur Wanddiagnostik, umfassend: Bereitstellen (401) eines Trainingsdatensatzes (143) zum Trainieren der künstlichen Intelligenz (125), wobei der Trainingsdatensatz (143) eine Wand (105) und ein in der Wand (105) ausgebildetes Objekt (113) abbildende Radardaten (103) und die nach dem Verfahren (200) zum Betreiben eines Messgeräts (100) nach einem der voranstehenden Ansprüche 1 bis 12 bereitgestellten Feedbackinformationen (112) umfasst; Trainieren (403) der künstlichen Intelligenz (125) basierend auf dem Trainingsdatensatz (143) und unter Berücksichtigung der Feedbackinformationen (112) zum Ausführen einer Objekterkennung eines in einer Wand (105) ausgebildeten Objekts (113), wobei die Objekterkennung wenigstens eine Objektdetektion und eine Objektklassifikation umfasst.

14. Recheneinheit (151), die eingerichtet ist, das Verfahren (200) zum Betreiben eines Messgeräts (100) nach einem der voranstehenden Ansprüche 1 bis 12 und/oder das Verfahren (400) zum Trainieren einer künstlichen Intelligenz (125) eines Messgeräts (100) zur Wanddiagnostik nach Anspruch 13 auszuführen.

15. Computerprogrammprodukt (500) umfassend Befehle, die bei der Ausführung des Programms durch eine Datenverarbeitungseinheit diese veranlassen, das Verfahren (200) zum Betreiben eines Messgeräts (100) nach einem der voranstehenden Ansprüche 1 bis 12 und/oder das Verfahren (400) zum Trainieren einer künstlichen Intelligenz (125) eines Messgeräts (100) zur Wanddiagnostik nach Anspruch 13 auszuführen.
